## Europäisches Patentamt
## European Patent Office
## Office européen des brevets

(19)

(11) Numéro de publication: **0 292 408**
**A1**

(12) **DEMANDE DE BREVET EUROPEEN**

(21) Numéro de dépôt: **88420147.6**

(22) Date de dépôt: **04.05.88**

(51) Int. Cl.⁴: **F 16 L 33/04**

(30) Priorité: **20.05.87 FR 8707280**

(43) Date de publication de la demande:
**23.11.88 Bulletin 88/47**

(84) Etats contractants désignés:
**BE DE ES GB IT NL SE**

(71) Demandeur: **Aguera, Michel**
**134, rue Léon Jouhaux**
**F-07500 Granges Les Valence (FR)**

(72) Inventeur: **Aguera, Michel**
**134, rue Léon Jouhaux**
**F-07500 Granges Les Valence (FR)**

(74) Mandataire: **Ropital-Bonvarlet, Claude**
**Cabinet BEAU DE LOMENIE 99, Grande rue de la**
**Guillotière**
**F-69007 Lyon (FR)**

(54) **Collier réglable pour l'adaptation de durites ou analogues.**

(57) Le collier réglable conforme à l'invention est caractérisé en ce que l'une des parties terminales du cerclage est pourvue de lumières espacées (6) et porte un cavalier (7) réglable en position par coopération avec l'une quelconque des lumières, ledit cavalier supportant une barrette (12) articulée sur un axe (11) parallèle à l'axe géométrique virtuel (b-b') du collier et portant indifféremment la noix ou la vis.

Fig-1

EP 0 292 408 A1

Bundesdruckerei Berlin

**Description**

# COLLIER REGLABLE POUR L'ADAPTATION DE DURITES OU ANALOGUES

La présente invention vise le domaine technique du montage et de l'adaptation étanche de durites ou analogues sur des tubes ou tubulures véhiculant un fluide quelconque sous une pression relativement élevée.

Le domaine technique concerné est, plus particulièrement, celui du montage et de l'adaptation de durites armées présentant une résistance élevée à la sollicitation axiale ou radiale, en vue de leur adaptation sur des circuits véhiculant un fluide hydraulique circulant sous forte pression.

Pour assurer le montage et l'adaptation de telles durites sur des tubes ou des tubulures, la technique antérieure propose de mettre en oeuvre des colliers comprenant un cerclage ou bandage, généralement réalisé à partir d'un feuillard métallique.

L'une des parties terminales du cerclage ou bandage porte une noix susceptible de tourner sur un axe sensiblement parallèle à un axe virtuel du cerclage ou bandage. Une telle noix est, généralement, pourvue d'un taraudage perpendiculaire à l'axe de rotation de la noix. L'autre partie terminale du cerclage ou bandage est pourvue d'une vis traversant librement un tourillon, afin de pouvoir être vissée dans le taraudage de la noix.

Il peut être considéré que de tels colliers donnent satisfaction pour la fonction première devant être assumée, c'est-à-dire, l'adaptation et le montage étanche d'une durite dans un circuit.

Cependant, de tels colliers font naître, par leur constitution, un inconvénient pratique représentant une sujétion importante pour les fabricants, les distributeurs et les utilisateurs.

Malgré le montage de la noix et du tourillon dans des boucles leur autorisant une faculté d'orientation, les colliers, actuellement fournis, n'offrent qu'une très faible amplitude d'adaptation en diamètre. Il est donc nécessaire de réaliser une gamme très importante de colliers différents, aptes chacun à permettre un montage sur deux, voire trois diamètres nominaux différents de durites.

Compte tenu de la grande diversité de diamètres nominaux de durites susceptibles d'être rencontrés dans les différentes applications, il est nécessaire de recourir à une gamme étendue de colliers qui doivent faire l'objet d'un lancement particulier de fabrication et d'une gestion rigoureuse de stock, tant à la distribution qu'à l'utilisation.

Malgré les dispositions rigoureuses prises dans ce sens, il est fréquent, pour les distributeurs et les utilisateurs, de constater que les stocks à leur disposition ne permettent pas de répondre sur le champ à la fourniture du collier adapté au travail à effectuer.

A titre d'exemple, il convient de préciser que, pour couvrir des diamètres nominaux compris entre 40 et 400 mm, il est généralement nécessaire de disposer de plus de trente colliers différents.

Le problème ci-dessus n'a pas échappé aux spécialistes en la matière et des solutions pour tenter d'y remédier ont été proposées.

La technique antérieure connaît un collier offrant une faculté de réglage lui permettant de couvrir une plus grande gamme de diamètres nominaux. L'un de ces colliers consiste à ménager, dans une partie terminale libre du cerclage, des fentes allongées selon une inclinaison et un pas déterminés, à la manière d'une couronne dentée ou d'une crémaillère. Cette partie terminale est destinée à être engagée dans un couloir à l'intérieur duquel fait saillie une vis dont le filetage est sécant au plan d'engagement de la partie terminale. La manoeuvre de la vis assure l'engrènement du filet hélicoïdal de la vis dans les fentes, ce qui permet de commander le déplacement de la partie terminale et de fermer ou ouvrir le collier.

Un tel collier peut être considéré comme apte à fournir un service acceptable, dans la mesure où les durites ne présentent pas de caractère ferme ou relativement rigide et n'ont pas à supporter des pressions élevées.

Dans le cas contraire, toute tentative de serrage pour contraindre radialement la durite sur la tubulure ou sur le tube, se traduit par le déchirement de la partie terminale présentant les fentes inclinées.

La technique antérieure a aussi proposé une autre disposition consistant à prévoir, sur une partie terminale du cerclage ou bandage, des lumières ou des pontets pour l'adaptation réglable d'un cavalier présentant, à cette fin, un ou des crochets d'adaptation. Le cavalier peut porter, indifféremment, la noix taraudée ou la vis.

Si une telle proposition paraît techniquement plus satisfaisante que la première, elle se révèle, néanmoins, incapable de supporter des tensions de serrage en relation avec la matière constitutive des durites ou analogues, mises en oeuvre dans les circuits hydrauliques à forte pression.

La présente invention vise à répondre positivement au problème ainsi posé en proposant un nouveau collier réglable, particulièrement conçu pour offrir une grande possibilité d'adaptation à des diamètres nominaux différents, tout en assurant un cerclage particulièrement ferme et résistant.

Un autre objet de l'invention est de proposer un nouveau collier capable de contraindre radialement des durites ou analogues, même armées, destinées à être emboîtées avec étanchéité sur des tubes ou tubulures de circuit véhiculant des fluides, notamment, hydrauliques à pression élevée.

Un autre objet encore de l'invention est de proposer un nouveau collier réglable, susceptible d'être fabriqué en grande série, à un prix de revient intéressant, tout en constituant un produit résistant capable de fournir un service fiable dans le temps.

Pour atteindre les objectifs ci-dessus, le collier réglable selon l'invention est caractérisé en ce que l'une des parties terminales du cerclage est pourvue de lumières espacées et porte un cavalier réglable en position par coopération avec l'une quelconque des lumières, ledit cavalier supportant une barrette articulée sur un axe parallèle à l'axe géométrique virtuel du collier et portant, indifféremment, la noix ou la vis.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une élévation latérale d'un collier conforme à l'invention.

La fig. 2 est une coupe-élévation montrant, à plus grande échelle, les dispositions constructives du collier selon l'invention.

La fig. 3 est une coupe-élévation illustrant une variante de réalisation de l'élément constitutif du collier selon la fig. 2.

La fig. 4 est une coupe-élévation partielle montrant, à échelle différente, une autre forme d'exécution du même élément constitutif.

La fig. 5 est une coupe transversale prise selon la ligne V-V de la fig. 4.

La fig. 6 est une perspective montrant, à échelle différente, l'un des éléments constitutifs illustré par la fig. 5.

La fig. 7 est une coupe-élévation analogue à la fig. 4, mais illustrant une variante de réalisation.

La fig. 8 est une coupe-élévation montrant, à échelle différente, une autre forme d'exécution de l'un des éléments constitutifs selon l'invention.

La fig. 9 est une vue en plan prise selon la ligne IX-IX de la fig. 8.

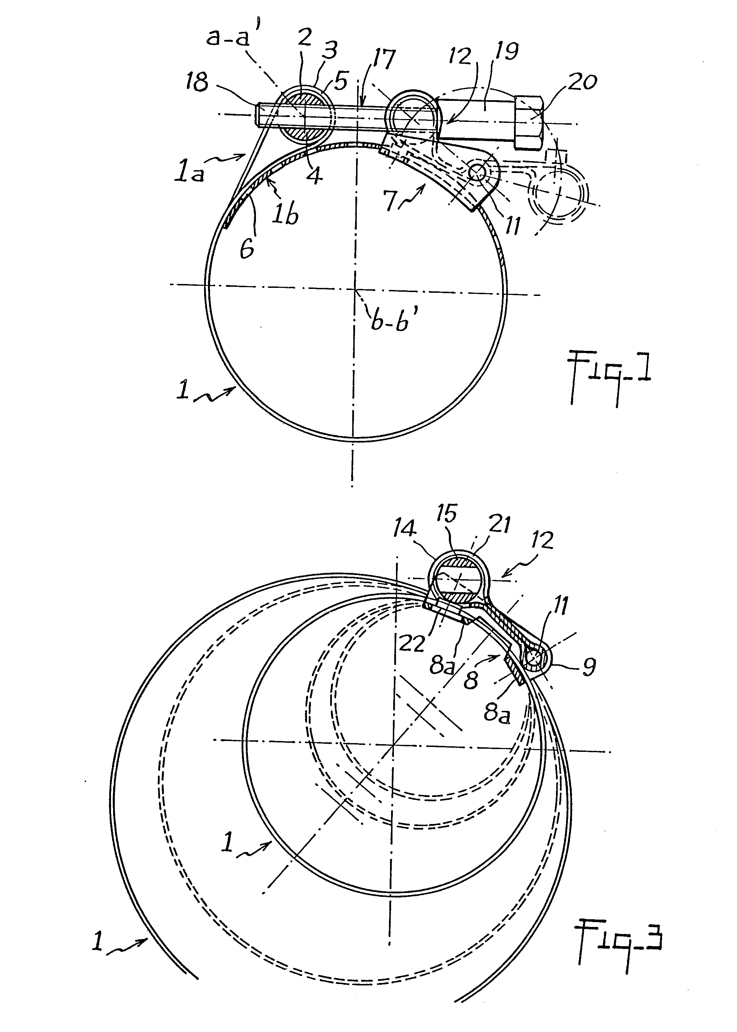

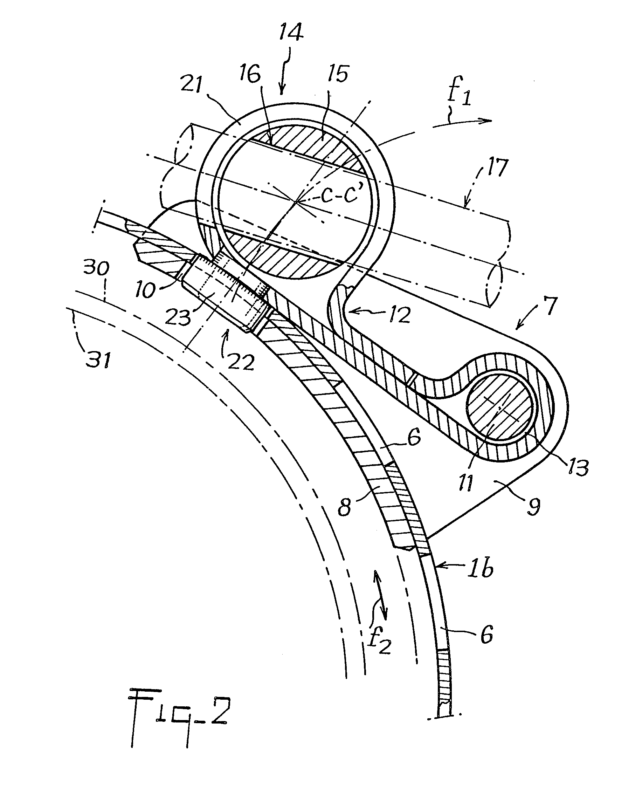

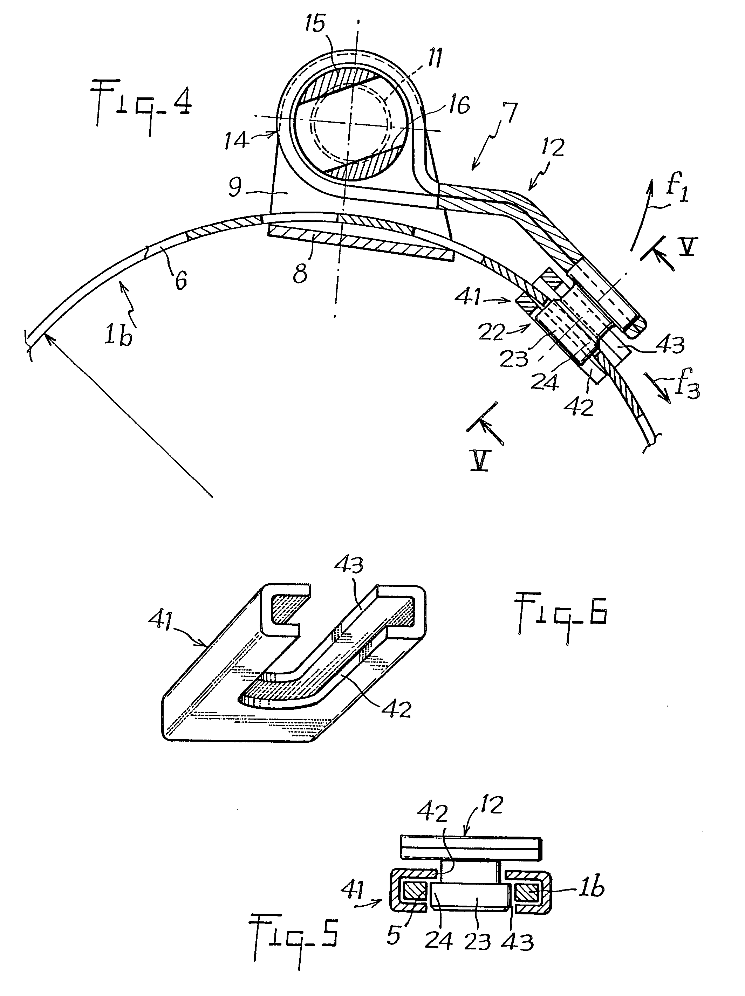

Le collier réglable, illustré par la fig. 1, comprend un cerclage ou bandage 1 préconformé à la manière d'un cercle ouvert dont les parties terminales 1a et 1b se recouvrent partiellement. En général, mais de façon non exclusive, le cerclage ou bandage 1 est réalisé à partir d'un feuillard métallique dont l'épaisseur et la caractéristique de résistance mécanique à la traction sont déterminées en fonction de l'application visée et de la plage de diamètres nominaux devant être couverte.

La partie terminale 1a est adaptée ou conformée pour retenir une noix 2 susceptible de tourner sur un axe a-a' parallèle à l'axe virtuel b-b' du cerclage ou du bandage 1. La partie terminale 1a peut comporter des ailes latérales dans lesquelles la noix 2 est montée avec possibilité de rotation. Une autre disposition peut aussi consister à conformer la partie terminale 1a pour lui faire comporter une boucle 3 entourant, à la manière d'un palier, la noix 2 qui est alors constituée par une pièce cylindrique. La noix 2 présente un taraudage diamétral 4 situé sensiblement dans son plan tranversal médian pour coïncider, d'une manière connue, avec un passage 5 ménagé à cet effet dans la boucle 3 sur sensiblement trois quarts de sa périphérie.

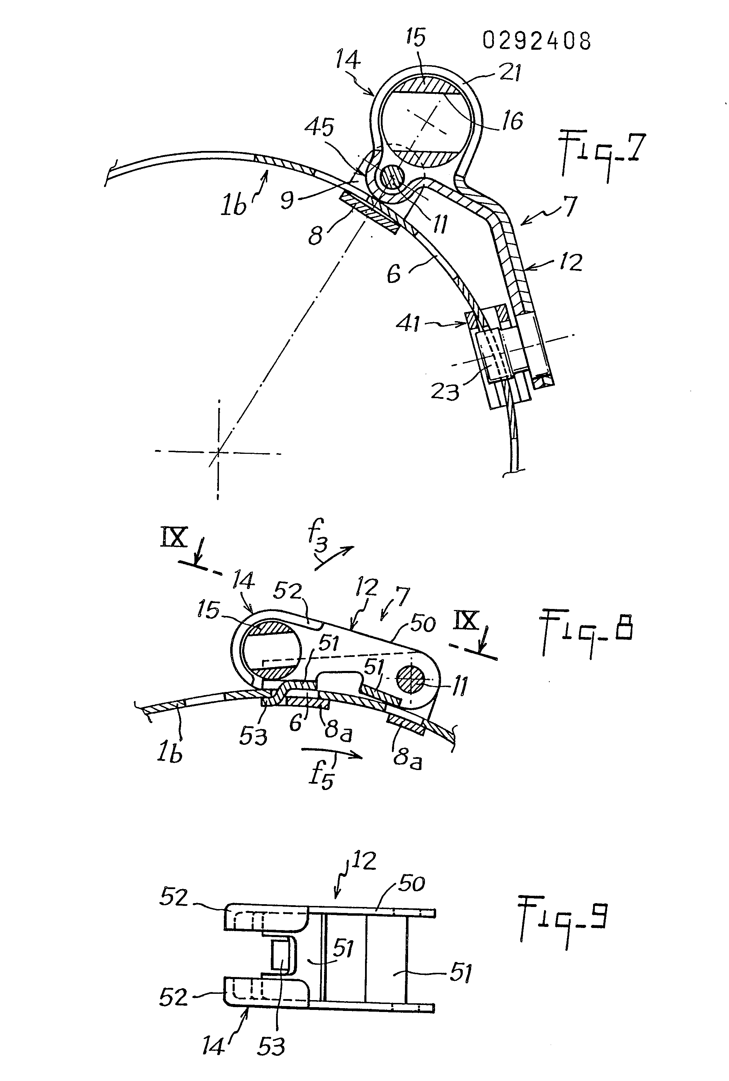

Selon l'invention, la partie terminale 1b possède, de place en place, des lumières ou fenêtres 6, de préférence, prévues de façon équidistante. Les fenêtres ou lumières 6, de toute forme appropriée, sont prévues pour permettre le montage et l'ancrage réglable d'un cavalier 7, plus particulièrement illustré par la fig. 2. Le cavalier 7 comprend une chape formée par une âme 8 courbe prolongée par deux ailes parallèles 9 s'étendant dans le même sens à partir de la face convexe de l'âme 8. La chape est, de préférence, réalisée en métal, par exemple par emboutissage. La courbure imposée à l'âme 8 est voisine du plus petit diamètre nominal susceptible d'être délimité par le cerclage ou le bandage 1, de manière que l'âme 8 puisse être glissée et appliquée sous la partie terminale 1b. Dans cette position, les ailes 9 bordent les bords longitudinaux de la partie terminale 1b du cerclage ou du bandage, en étant dirigées pour faire saillie, simultanément, à partir de la face extérieure de cette partie terminale.

L'âme 8 est réalisée pour comporter, en retrait de l'une de ses extrémités transversales, une ouverture 10 de même forme générale que les fenêtres ou lumières 6, mais de section supérieure à celle de ces dernières.

Dans la forme d'exécution illustrée, les ailes 9 portent, sensiblement à l'aplomb de l'autre extrémité transversale de l'âme 8, un axe 11 d'articulation d'une barrette pivotante 12 délimitant un palier 13 de coopération avec l'axe 11. La barrette 12 peut être réalisée de toute façon convenable et, notamment, par pliage, roulage et soudage d'une bande métallique. La barrette 12 délimite, à l'opposé du palier 13, une boucle 14 réservée au montage d'un tourillon 15 susceptible de tourner sur un axe c-c' parallèle à l'axe virtuel b-b'. Le tourillon 15 comporte un alésage diamétral 16 réservé au passage d'une vis 17 possédant une partie filetée 18 apte à coopérer avec le taraudage 4 de la noix 2. La vis 17 possède un fourreau 19 de butée entre une tête 20 et la boucle 14. De manière à permettre le passage de la vis 17, la boucle 14 présente, dans sa partie médiane longitudinale et sur sensiblement trois quarts de sa périphérie, une ouverture oblongue 21.

La barrette articulée 12 comporte, à distance du palier 13 et sur sa partie tournée vers le cerclage ou le bandage, une saillie 22 destinée à coopérer avec une lumière 6. Dans l'exemple de réalisation illustrée, la saillie 22 est constituée par un pion 23 rapporté, par exemple, par soudure et dont le diamètre est légèrement inférieur à celui des fenêtres ou lumières 6.

Dans la position illustrée par la fig. 2, on constate que la barrette articulée 12 est pivotée, de manière que le pion 23 traverse une lumière 6 et soit engagé, à travers la partie terminale 1b, dans l'ouverture 10 de l'âme 8. Dans cette position, le cavalier 7 est ancré sur la partie terminale 1b et la vis 17 peut être vissée dans le taraudage 4 de la noix 2. Dans la mesure où le cavalier 7 occupe une position adéquate, une durite 30, préalablement enfilée sur un tube ou une tubulure 31 et entourée par le collier 1, peut alors être serrée fortement pour répondre aux exigences d'adaptation et de montage étanche, même dans le cas où le tube ou la tubulure 31 véhicule un fluide sous pression élevée. En effet, le serrage de la vis 17 a tendance à accroître l'engagement du pion 23, à travers la partie terminale 1b qui est ainsi sollicitée en serrage efficace, par enroulement autour de la durite 30. Le serrage de la vis est, par ailleurs, transmis par la barrette 12 à l'axe 11 et à la chape dont l'âme 8, prenant appui sous la partie terminale 1b, vient renforcer cette dernière en transmettant l'effort de traction. Cette disposition permet d'appliquer un serrage particulièrement intense, sans risque de déchirement du feuillard constitutif de la partie terminale 1b.

Il convient de noter que la présence de l'âme 8 entre la partie terminale 1b et la face extérieure de la durite 30 ne représente pas une surépaisseur incompatible avec la fonction envisagée, étant donné que l'action de serrage permet d'imprimer suffisamment cette épaisseur dans la matière constitutive de la durite, sans altérer l'effet de serrage périphérique établi par le collier 1.

Dans le cas où il convient d'adapter le diamètre du collier 1 à un diamètre nominal différent de durite 30, il suffit de dévisser la vis 17 pour dégager la partie filetée de la noix 2. La barrette 12 peut ensuite être pivotée dans le sens de la flèche $f_1$ sur l'axe 11, pour dégager le pion 23 simultanément de l'ouverture 10 et de la lumière ou fenêtre 6. Le cavalier 7 peut alors être librement déplacé dans l'un ou l'autre sens de la flèche $f_2$, pour adapter la circonférence du collier en fonction de la durite 30 devant être entourée. Un tel réglage s'effectue par approximation et par excès, en tenant compte de la longueur de la partie filetée 18 de la vis 17. Lorsque la position convenable a été adoptée, la barrette 12 est pivotée dans le sens inverse de la flèche $f_1$ sur l'axe 11, pour assurer l'engagement du pion 23 à travers la fenêtre ou la lumière 6 correspondante, puis dans l'ouverture 10 de l'âme 8. Par orientation du tourillon 15, la partie filetée 17 peut être amenée à coopérer de nouveau avec la noix 2, pour reconstituer le collier et permettre le serrage de la durite 30 sur le tube ou la tubulure 31.

La mise en oeuvre des moyens selon l'invention permet de couvrir une plage de diamètres nominaux de durites compris entre 40 et 400 mm, avec simplement une gamme de cinq colliers différents par la longueur des cerclages ou bandages 1.

La fig. 3 montre une variante de réalisation selon laquelle la chape comporte une âme 8 constituée par deux bandes transversales 8a subsistant en relation avec les deux extrémités de la chape. Une telle disposition permet de simplifier la réalisation de la chape, en évitant la présence de l'âme 8 cambrée, comme dans l'exemple décrit précédemment.

Les fig. 4 à 6 illustrent une autre forme d'exécution selon laquelle la chape 7 assure le support de la barrette 12 par l'intermédiaire d'un axe d'articulation 11 qui est constitué directement par le tourillon 15. Dans un tel cas, la partie terminale de la barrette 12, opposée à la boucle 14, porte une saillie 22 constituée par un pion 23 présentant une tête épaulée 24 de plus grand diamètre. La tête épaulée 24 est destinée à coopérer avec une ouverture 6 et avec un coulisseau 41 constituant un organe d'arrêt réalisé sous la forme d'un passant coulant rigide, à l'intérieur duquel la partie terminale 1b est enfilée. Le coulisseau 41 présente, dans ses deux faces latérales opposées, des encoches 42 et 43 dont la largeur utile correspond, au jeu près, au diamètre de la tête 24 et du pion 23.

Après engagement du pion 23 dans une ouverture 6, le coulisseau 41 peut être déplacé dans le sens de la flèche $f_3$, de manière à être engagé simultanément sur la tête et sur le pion, de part et d'autre de la partie terminale 1b. Dans cette position, illustrée par la fig. 4, le pion 23 est immobilisé par le coulisseau sur la partie terminale 1b et s'oppose à tout pivotement de la barrette 12 dans le sens de la flèche $f_1$ sur l'axe formé par le tourillon 15.

La fig. 7 illustre une variante de réalisation de la construction selon la fig. 4. Dans un tel cas, la barrette 12 délimite, dans la boucle 14, un palier ouvert 45 réservé au montage d'un axe 11 porté par la chape. L'axe 11 est immobilisé dans le palier ouvert, par l'intermédiaire du tourillon 15 qui est ainsi maintenu par la boucle 14 dans une position radialement plus éloignée de l'axe virtuel du cerclage. Une telle disposition permet d'accroître les possibilités de réglage du collier.

La fig. 8 montre une autre forme d'exécution selon laquelle la barrette 12, au lieu d'être réalisée par roulage à partir d'une bande de matière, est constituée par emboutissage-découpage d'un flan métallique. La barrette 12 comprend alors, dans un tel cas, deux joues 50 reliées par des traverses 51. Les joues comportent, à proximité de l'une des parties terminales, des paliers pour le montage de l'axe 11 et, à l'extrémité opposée, des retours 52 couvrant chacun sensiblement une plage égale à 180° pour définir la boucle 14 et retenir le tourillon 15.

L'exécution de la barrette 12 selon les fig. 8 et 9 permet de faire venir, par emboutissage-découpage dans la traverse 51 située à proximité des retours 52, un béquet 53 contre-coudé apte à être engagé à travers une ouverture 6. La barrette 12, montée sur une chape du type de celle de la fig. 3, peut ainsi être déplacée, dans le sens de la flèche $f_5$, à partir de la position selon la fig. 8, pour dégager le béquet 53 de la fenêtre ou lumière 6. Ce dégagement autorise le pivotement de la barrette 12 dans le sens $f_1$, en vue du réglage dans une autre position appropriée occupée de façon stable par l'engagement du béquet 53 dans la lumière ou fenêtre 6 correspondante.

Dans la forme de réalisation ci-dessus, la chape comporte une âme constituée par deux bandes 8a dont l'une est formée pour être placée derrière le béquet 53.

L'invention n'est pas limitée aux exemples décrits et représentés, car diverses modifications peuvent y être apportées sans sortir de son cadre.

## Revendications

1 - Collier réglable pour l'adaptation de durites ou analogues, du type comprenant un cerclage (1) préconformé sensiblement en cercle ouvert, dont l'une des parties terminales (1a) porte une noix taraudée (2) et dont l'autre partie terminale (1b) est pourvue d'une vis (17) de serrage par coopération avec la noix,

caractérisé en ce que l'une des parties terminales du cerclage est pourvue de lumières espacées (6) et porte un cavalier (7) réglable en position par coopération avec l'une quelconque des lumières, ledit cavalier supportant une barrette (12) articulée sur un axe (11) parallèle à l'axe géométrique virtuel (b-b') du collier et portant indifféremment la noix ou la vis.

2 - Collier réglable selon la revendication 1, caractérisé en ce que la barrette articulée (12) porte un tourillon (15) libre de tourner sur un axe (c-c') parallèle à celui d'articulation de la barrette sur le cavalier.

3 - Collier réglable selon la revendication 1 ou 2, caractérisé en ce que le cavalier (7) comprend une chape de support chevauchant le cerclage pour que son âme (8) soit appliquée au moins en partie contre la face interne du cerclage et pour que ses ailes (9) bordent les bords du cerclage.

4 - Collier réglable selon la revendication 1 ou 2, caractérisé en ce que la barrette articulée (12) est pourvue d'une saillie (22) d'engagement dans une lumière (6).

5 - Collier réglable selon la revendication 4, caractérisé en ce que la saillie (22) est constituée par un pion (23) rapporté sur la barrette.

6 - Collier réglable selon la revendication 4, caractérisé en ce que la saillie (22) est formée par un béquet (53) découpé et contre-coudé à partir de la barrette.

7 - Collier réglable selon la revendication 5, caractérisé en ce que le pion (23), de forme épaulée, est associé à un organe d'arrêt (41), analogue à un coulisseau, enfilé sur le cerclage.

8 - Collier réglable selon la revendication 1, caractérisé en ce que l'axe d'articulation (11) de la barrette est porté par les ailes (9) de la chape.

9 - Collier réglable selon la revendication 1, caractérisé en ce que l'axe d'articulation (11) est formé par le tourillon (15).

10 - Collier réglable selon l'une des revendications 1, 2, 4, 5, 6 ou 7, caractérisé en ce que la saillie (22) est portée à proximité de la partie terminale de la barrette opposée à l'axe d'articulation (11).

0292408

Fig.1

Fig.3

0292408

Fig. 2

0292408

Fig_4

15
11
16
14
7
12
9
$f_1$
V
6
8
41
1b
22
43
23
24
42
$f_3$
V

43
41
Fig_6
42

42
12
41
1b
Fig_5
5
24 23 43

0292408

Fig-7

Fig-8

Fig-9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 368 929  (J.T. KING) <br> * figures * <br> --- | 1,2 | F 16 L  33/04 |
| A | US-A-2 635 319  (J.J. SKELLY) <br> * figures * <br> --- | 1 | |
| A | FR-A-  930 201  (M. DEBROCK) <br> * figures * <br> --- | 1,4 | |
| A | CH-A-  371 304  (F. JOLY) <br> * figure 1 * <br> ----- | 1,4 | |

**DOMAINES TECHNIQUES RECHERCHES (Int. Cl.4)**

F 16 L  33/00
F 16 B   2/00

Le présent rapport a été établi pour toutes les revendications

| Lieu de la recherche | Date d'achèvement de la recherche | Examinateur |
|---|---|---|
| BERLIN | 22-07-1988 | SCHAEFFLER C.A.A. |